Europäisches Patentamt

(19) European Patent Office

Office européen des brevets

(11) Numéro de publication: **0 197 582**
**B1**

(12) **FASCICULE DE BREVET EUROPEEN**

(45) Date de publication du fascicule du brevet:
18.07.90

(51) Int. Cl.⁵: **G01S 15/02**, G01S 15/89,
G01S 7/52

(21) Numéro de dépôt: **86200473.6**

(22) Date de dépôt: **21.03.86**

(54) **Procédé et appareil d'exploration de milieux par échographie ultrasonore.**

(30) Priorité: **29.03.85 FR 8504820**

(43) Date de publication de la demande:
**15.10.86 Bulletin 86/42**

(45) Mention de la délivrance du brevet:
**18.07.90 Bulletin 90/29**

(84) Etats contractants désignés:
**DE FR GB**

(56) Documents cités:
**EP-A- 0 077 585**
**EP-A- 0 091 768**
**EP-A- 0 100 234**
**EP-A- 0 116 901**
**US-A- 4 470 303**

**IEEE TRANSACTIONS ON SONICS AND ULTRASONICS,
vol. SU-30, no. 1, janvier 1983, pages 26-36, IEEE, New
York, US; M. O'DONNELL: "Quantitative volume
backscatter imaging"
IEEE 1976 ULTRASONICS SYMPOSIUM PROCEEDINGS,
Cat. no. 76 CH 1120-5SU, pages 714-719, New York, US;
F.L. LIZZI et al.: "Tissue signature characterization
utilizing frequency domain analysis"**

(73) Titulaire: **LABORATOIRES D'ELECTRONIQUE PHILIPS,
3, Avenue Descartes, F-94450 Limeil-Brévannes(FR)**
(84) Etats contractants désignés: **FR**

(73) Titulaire: **N.V. Philips' Gloeilampenfabrieken,
Groenewoudseweg 1, NL-5621 BA Eindhoven(NL)**
(84) Etats contractants désignés: **DE GB**

(72) Inventeur: **Nicolas, Jean-Marie, Société Civile
S.P.I.D. 209 rue de l'Université, F-75007 Paris(FR)**

(74) Mandataire: **Landousy, Christian et al, Société Civile
S.P.I.D. 209, Rue de l'Université, F-75007 Paris(FR)**

## Description

La présente invention concerne un procédé d'exploration de milieux par échographie ultrasonore comportant une émission répétée de signaux ultrasonores par au moins un transducteur ultrasonore et la réception des signaux échographiques ultrasonores correspondant aux obstacles rencontrés dans leur direction de propagation par les signaux émis, procédé dans lequel les signaux reçus sont aiguillés sur n voies parallèles correspondant à des bandes de fréquence sensiblement égales et jointives pour couvrir approximativement toutes les fréquences des signaux reçus, puis l'on détermine l'enveloppe des signaux dans chaque voie.

L'invention concerne également un appareil d'exploration de milieux par échographie ultrasonore pour la mise en œuvre du procédé selon la revendication 1, comportant au moins un transducteur ultrasonore associé à un étage d'émission pour assurer une émission répétée de signaux ultrasonores et à un étage de réception pour assurer la réception des échos ultrasonores correspondant aux obstacles rencontrés dans leur direction de propagation par les signaux émis, ledit étage de réception comprenant au moins:

(A) un amplificateur recevant le signal de sortie du transducteur;

(B) un ensemble de n voies en parallèle les unes sur les autres en sortie de l'amplificateur, comprenant elle-mêmes chacune successivement:

(1) un filtre passe-bande, l'ensemble des n filtres ainsi prévus étant tel que leurs bandes passantes respectives sont sensiblement égales et jointives pour couvrir approximativement la bande passante du transducteur;

(2) un détecteur d'enveloppe (222a à 222n), identique dans chaque voie et comprenant un redresseur suivi d'un filtre passe-bas.

Un tel appareil est utilisable par exemple dans le domaine du contrôle non destructif des matériaux et pour l'exploration de tissus biologiques.

Une image échographique ultrasonore traditionnelle est obtenue par détection de l'enveloppe des échos engendrés dans les tissus par un faisceau d'ultrasons. Les échos les plus importants prenant naissance aux frontières des organes, ces images montrent principalement les contours de ces derniers. Toutes les informations liées à la phase (et donc à la fréquence) du signal sont alors perdues. Or ces informations peuvent être reliées à de bons indicateurs de certaines pathologies diffuses très difficiles à diagnostiquer par d'autres moyens.

Le but de l'invention est de proposer un procédé et un appareil d'examen de milieux par échographie ultrasonore avec lesquels on s'attache à déterminer la dépendance en fréquence de la fonction de diffusion du milieu examiné, l'évaluation quantitative ainsi effectuée permettant une caractérisation du milieu examiné et la connaissance de son état pathologique.

A cet effet, le procédé selon l'invention est caractérisé en ce qu'il est destiné à déterminer la dépendance en fréquence de la fonction de diffusion du milieu exploré $U(f) = af^b$, a et b étant des coefficients, et la fonction de diffusion étant liée au spectre de puissance $S_W(\tau, f)$ des échos reçus dans une fenêtre temporelle W à l'instant $\tau$ par la relation $S_W(\tau, f) = |G(f)|^2 . |(U(f)|^2 . D(\tau, f) . e^{-2\alpha(f)c\tau}$ où $|G(f)|^2$ dépend du signal d'émission et du transducteur, $D(\tau, f)$ traduit l'effet de diffraction, et $\alpha(f)$ et c correspondent respectivement à l'atténuation et à la vitesse des signaux ultrasonores dans le milieu exploré, en ce que chacun de ces signaux-enveloppes, proportionnel au spectre de puissance du signal reçu dans la voie correspondante, est divisé par un signal de division proportionnel au spectre de puissance d'un fantôme de même atténuation ultrasonore que celle du milieu exploré, en ce qu'on détermine le logarithme du signal résultant de cette division, après quoi, à partir des signaux ainsi obtenus, on procède en sortie desdites voies a, b, ..., i, ..., n aux opérations suivantes:

(a) calcul du logarithme de la fréquence centrale $f_v$ de la bande passante associée à chaque voie, ou d'une autre fréquence représentative de cette bande passante;

(b) mémorisation et/ou représentation du logarithme du signal résultant de la division et représentant le rapport de la fonction de diffusion du milieu exploré et de celle du fantôme en fonction de ladite fréquence intervenant dans le calcul effectué en (a);

(c) calcul de la fonction de diffusion du milieu exploré à partir dudit rapport des fonctions de diffusion, la fonction de diffusion du fantôme étant connue, et en ce que le signal de division proportionnel au spectre de puissance du fantôme est obtenu après avoir réalisé les mesures suivantes: (a) opérer la sélection d'une tranche du fantôme située à l'avant de celui-ci par rapport à l'appareil et à une distance Z sur la direction de propagation, le fantôme étant appliqué contre le transducteur; (b) à signal d'émission constant, déterminer le spectre énergétique du signal échographique reçu, dans une première position et à la distance Z, puis à la même distance Z mais pour d'autres positions obtenues par déplacements perpendiculaires à la direction de propagation afin d'obtenir un spectre énergétique moyen; (c) répéter la même détermination de spectre énergétique moyen à d'autres distances Z entre l'appareil et le fantôme; (d) calculer pour toutes ces distances successives le long de l'axe Z les valeurs dudit signal de division.

Les demandes de brevet EP-A 0 196 713 et EP-A 0 196 714 déposées le même jour par les sociétés demanderesses décrivent également, l'une et l'autre, un procédé de détermination de la fonction de diffusion de milieux, à cette différence près que les traitements opérés et les circuits correspondants sont de nature distincte. En effet, dans ces demandes on ne prévoit pas d'utiliser, comme dans la présente demande, une solution technique procédant par bandes de fréquence adjacentes et par référence à un fantôme de même atténuation que le milieu exploré.

Pour la mise en œuvre de ce procédé, l'appareil selon l'invention est caractérisé en ce que, pour déterminer la dépendance en fréquence de la fonction de diffusion du milieu exploré $U(f) = af^b$, a et b étant des coefficients, et la fonction de diffusion étant liée au spectre de puissance $S_W(\tau, f)$ des échos reçus dans une fenêtre temporelle W à l'instant $\tau$ par la relation

$S_W(\tau, f) = |G(f)|^2 . |U(f)|^2 . D(\tau, f) . e^{-2\alpha(f)c\tau}$ où $|G(f)|^2$ dépend du signal d'émission et du transducteur, $D(\tau, f)$ traduit l'effet de filtrage dû à la diffraction, et $\alpha(f)$ et c correspondent respectivement à l'atténuation et à la vitesse des signaux ultrasonores dans le milieu exploré, l'étage de réception comprend également, dans chaque voie, à la suite du détecteur d'enveloppe:

(3) un circuit de division, qui reçoit sur une première entrée le signal de sortie du détecteur d'enveloppe correspondant et sur une deuxième entrée ledit signal de division délivré par une première mémoire commandée par un circuit d'horloge de l'étage d'émission;

(4) un amplificateur logarithmique;
et en ce qu'en sortie des n voies, l'étage de réception comprend également un circuit de traitement arithmétique agencé pour, à partir de leurs n signaux de sortie:

(a) calculer le logarithme de la fréquence centrale fv de la bande passante associée à chaque voie, ou d'une autre fréquence représentative de cette bande passante;

(b) mémoriser et/ou représenter le logarithme du signal résultant de la division et représentant le rapport de la fonction de diffusion du milieu exploré et de celle du fantôme en fonction de ladite fréquence intervenant dans le calcul effectué en (a);

(c) calculer la fonction de diffusion du milieu exploré.

La demande de brevet européen EP-A 77 585 décrit un appareil d'exploration de milieux par échographie ultrasonore dans lequel il est effectivement prévu, à la réception, de fractionner les signaux échographiques et de les aiguiller, pour leur traitement, vers des voies en parallèle correspondant à des bandes de fréquence sensiblement égales et jointives (ce qui permet de couvrir toutes les fréquences des signaux ainsi reçus). Mais les traitements qui suivent ces opérations initiales sont ensuite distincts. En effet, le document cité s'attache ensuite à étudier la variation de l'atténuation en fonction de la fréquence à l'aide de l'observation de l'évolution, en fonction du temps, du centre de gravité des spectres instantanés de fréquence du signal de sortie du transducteur, tandis que, dans le cas présent, on opère l'étude de la fonction de diffusion, grandeur bien distincte de l'atténuation et qui caractérise l'aptitude corpusculaire du milieu exploré à renvoyer des ondes ultrasonores de façon omnidirectionnelle.

Les particularités et avantages de l'invention apparaîtront maintenant de façon plus détaillée dans la description qui suit et dans les dessins annexés donnés à titre d'exemples non limitatifs et dans lesquels:

la figure 1 montre un exemple de réalisation de l'appareil selon l'invention;
la figure 2 est une courbe qui met en évidence les résultats des opérations effectuées par le circuit de traitement prévu dans l'appareil selon l'invention;
la figure 3 montre une variante de réalisation de l'appareil selon l'invention.

L'analyse, évoquée plus haut, de la dépendance en fréquence de la fonction de diffusion du milieu examiné est réalisée, dans le cadre de la présente invention, par l'intermédiaire d'une comparaison de spectres moyens de puissance. On sait que l'expression d'un spectre moyen de puissance peut s'écrire, pour une fenêtre temporelle w, à l'instant:

$$S_W(\tau, f) = |G(f)|^2 . |U(f)|^2 . D(\tau, f) . e^{-2\alpha(f)c\tau} \qquad (1)$$

Dans cette expression, $G(f)^2$ ne dépend que du signal d'émission et des caractéristiques acoustiques et électriques du transducteur, $D(\tau, f)$ traduit l'effet de filtrage de la diffraction dû à la géométrie du transducteur, $\alpha(f)$ et c expriment l'atténuation et la vitesse des ondes ultrasonores dans le milieu examiné, et $U(f)$ est la fonction de diffusion du milieu.

L'appareil proposé conformément à l'invention est prévu, dans un premier mode de réalisation, pour l'analyse d'un milieu dont l'atténuation est connue, à l'aide de données acquises avec un fantôme de même atténuation. Ce fantôme, dans l'exemple ici décrit, était un gel incluant de petites sphères de graphite dont la loi de rétrodiffusion était connue (ces sphères sont en effet des diffuseurs de Rayleigh dont le spectre de puissance de l'onde diffusée varie comme la puissance quatrième de la fréquence). Pour ce fantôme, la dépendance en fréquence de la fonction de diffusion du milieu, $U_p(f)$, est connue, et constante dans la gamme de fréquences 1 à 10 mégahertz. On peut alors, en tout point d'une ligne échographique, déterminer U(f) donnée par l'expression:

$$U(f) = \left( \frac{S_W(\tau, f)}{S_{wp}(\tau, f)} \right)^{1/2} \cdot U_p(f) \qquad (2)$$

où $U_p(f)$ et $U(f)$ sont donc les fonctions de diffusion respectivement du fantôme (connue) et du milieu exploré (non connue, à déterminer, et $S_{wp}(\tau, f)$ et $S_W(\tau, f)$ les expressions du spectre moyen de puissance respectivement pour le fantôme et le milieu exploré.

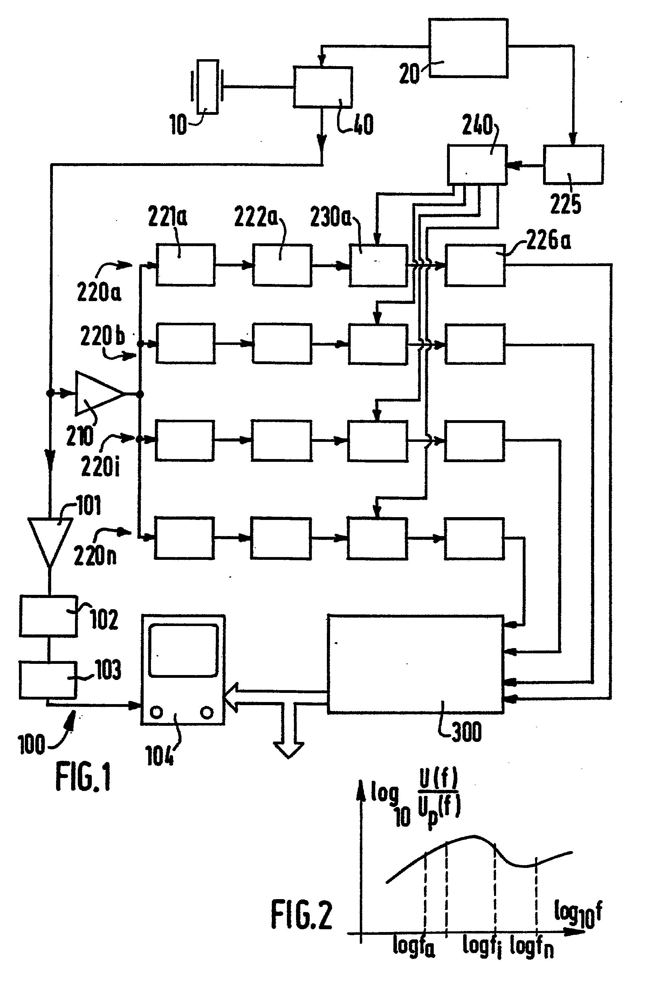

Cette détermination de la fonction de diffusion est réalisable à l'aide de l'appareil décrit en référence à la figure 1. Cet appareil est ici équipé d'une sonde unique constituant le support d'un transducteur ultrasonore 10 et permettant d'obtenir des échographies de type A de milieux tels que des tissus biologiques. Il va sans dire que l'invention est applicable exactement de la même manière si l'on explore non plus seulement une ligne, mais toute une section plane des tissus soit à l'aide d'une sonde à déplacement manuel ou à déplacement mécanique angulaire dit sectoriel, associée à un écran de visualisation du type radar, soit à l'aide d'une barrette linéaire de p transducteurs ultrasonores définissant un même nombre p de directions d'exploration parallèles dans le milieu à examiner et associée à un circuit de commutation du dispositif de traitement d'échos successivement sur chaque transducteur ou groupe de transducteurs en fonctionnement, soit encore à l'aide d'une barrette de transducteurs dite à balayage électronique sectoriel, également associée à un circuit de commutation du dispositif de traitement ainsi qu'à un réseau de lignes à retard ou de déphaseurs.

Le transducteur 10 est associé d'un part à un étage d'émission (20, 225) destiné à permettre une émission répétée de signaux ultrasonores par le transducteur dans une direction d'exploration quelconque à travers les tissus à examiner et d'autre part à un étage de réception destiné à assurer le traitement des échos ultrasonores reçus par le transducteur et correspondant aux obstacles rencontrés dans leurs directions de propagation par les signaux émis. Ces obstacles sont repérés sur les échogrammes par les échos de grande amplitude qui matérialisent les frontières entre les tissus pour lesquels on cherche à déterminer la dépendance en fréquence du coefficient de rétrodiffusion. Cette association est en général réalisée par l'intermédiaire d'un circuit de sélection alternative 40 assurant la liaison exclusive soit de l'étage d'émission, soit de l'étage de réception, avec le transducteur (un tel circuit de sélection est mentionné par exemple dans le brevet des Etats-Unis d'Amérique No 4 139 834). Ce circuit 40 évite la dégradation des signaux émis sous l'influence des signaux de réception ou, alternativement, l'aveuglement des signaux reçus par les signaux d'émission.

Dans le mode de réalisation décrit, l'étage de réception comprend d'une part un premier circuit de traitement 100 des échos ultrasonores reçus, composé d'un premier amplificateur 101 (qui est en fait un préamplificateur), d'un dispositif de compensation de gain 102, d'un détecteur d'enveloppe 103 assurant des fonctions de redressement et de filtrage, et d'un dispositif de visualisation 104. Le transducteur 10 est relié par son électrode de sortie et par l'intermédiaire du circuit 40 à l'entrée de l'amplificateur 101, dont les signaux de sortie traversent le dispositif 102 assurant la compensation de l'amplitude des échos en fonction de la distance et le dispositif 103, puis sont visualisés sur le dispositif 104, sous la forme d'une échographie de type A, sur un axe correspondant à la direction principale de propagation du transtucteur 10. L'étage de réception comprend d'autre part un deuxième circuit de traitement, placé en parallèle sur le premier circuit 100 et composé à son tour des éléments suivants:

(A) un deuxième amplificateur 210 recevant également le signal de sortie du transducteur 10;
(B) un ensemble de n voies 220a à 220n en parallèle les unes sur les autres en sortie de l'amplificateur 210, comprenant elles-mêmes chacune successivement:
(1) un filtre passe-bande 221a à 221n, l'ensemble des n filtres ainsi prévus étant tel que leurs bandes passantes respectives sont sensiblement égales et jointives pour couvrir approximativement la bande passante du transducteur;
(2) un détecteur d'enveloppe 222a à 222n, identique dans chaque voie et comprenant un redresseur suivi d'un filtre passe-bas à constante de temps réglable de préférence à une valeur supérieure à l'intervalle de temps moyen qui sépare les échos de faible amplitude correspondant à deux centres diffuseurs adjacents, ceci afin de diminuer le bruit inhérent au milieu biologique et à ses inhomogénéités.

L'étage de réception comprend en outre, dans chaque voie, à la suite du détecteur d'enveloppe correspondant:
(3) un circuit de division 230a à 330n, qui, pour calculer l'expression $(S_W(\tau, f)/S_{wp}(\tau, f))^{1/2}$, reçoit sur une première entrée le signal de sortie du détecteur d'enveloppe correspondant et sur une deuxième entrée un signal dit de division délivré par une mémoire 240 commandée par un circuit d'horloge 225, ledit circuit d'horloge étant lui-même déclenché par l'horloge de l'étage d'émission;

4

(4) un amplificateur logarithmique 226a à 226n;

(C) en sortie des n voies 220a à 220n, un circuit de traitement arithmétique 300 qui, à partir de leurs n signaux de sortie, procède aux opérations suivantes:

(a) calcul du logarithme de la fréquence centrale $f_i$ de la bande passante associée à chaque voie (ou d'une autre fréquence représentative de cette bande passante);

(b) mémorisation et/ou représentation (sur la figure 2, en coordonnées logarithmiques) du rapport de la fonction de diffusion du milieu exploré et de celle du fantôme en fonction de ladite fréquence intervenant dans le calcul effectué en (a);

(c) calcul de la fonction de diffusion du milieu exploré.

Comme la fonction de diffusion peut par hypothèse être exprimée sous la forme polynômiale $U(f) = a \cdot f^b$, que la représentation opérée en (b) est en fait une courbe parallèle à la courbe $\log_{10}(U(f)/U_p(f))$ (en fonction de $\log_{10}f$) et que la pente locale de cette courbe est la valeur $b-b_p$ où $b_p$ est la valeur de b dans le cas du fantôme, il suffit d'ajouter à cette expression la valeur $b_p$ de b dans le cas du fantôme pour obtenir une expression qui est proportionnelle à $U(f)$ et qui est donc suffisante pour connaître la dépendance en fréquence de la fonction de diffusion du milieu exploré.

L'expression ainsi obtenue, proportionnelle à $U(f)$, constitue le paramètre recherché, qui est porté à la connaissance de l'utilisateur soit directement par affichage (sur le dispositif 104), soit stocké en mémoire pour interprétation ou utilisation ultérieure.

Bien entendu, la présente invention n'est pas limitée à l'exemple de réalisation décrit, à partir duquel des variantes peuvent être proposées. En particulier, on notera que la mémoire 240 est soit une mémoire morte programmable, de type PROM par exemple, soit une mémoire à accès aléatoire, et qu'elle est chargée de la façon suivante, que le transducteur soit de type focalisant ou non. On opère la sélection d'une tranche du fantôme située à l'avant de celui-ci par rapport à l'appareil et à une distance Z sur l'axe principal de propagation, le fantôme étant appliqué contre le transducteur. On détermine dans cette position le spectre énergétique du signal échographique, avec un signal d'émission qui est supposé rester le même par la suite, puis on reprend cette détermination à la même distance Z mais pour d'autres positions obtenues par déplacements perpendiculaires à l'axe principal de propagation, afin d'obtenir un spectre énergétique moyen; on effectuera par exemple une moyenne de 100 spectres autour de la même position. On répète ensuite la même détermination de spectre énergétique moyen, à d'autres distances Z entre l'appareil et le fantôme. On calcule alors, pour toutes ces positions successives le long de l'axe Z, les valeurs de correction par lesquelles on va diviser les sorties des circuits 230a à 230n, et ces valeurs de correction sont introduites dans la mémoire 240.

On notera aussi que, dans l'exemple décrit, l'amplificateur 210 est un amplificateur à gain fixe, mais que, si cet élément était remplacé par un circuit à contrôle automatique de gain en fonction de la distance, il faudrait immobiliser temporairement ce gain, le temps d'effectuer les mesures. Un tel résultat peut être obtenu en prévoyant l'action d'une fenêtre temporelle suspendant la variation du gain entre deux instants correspondant à la tranche de tissus concernée par les mesures.

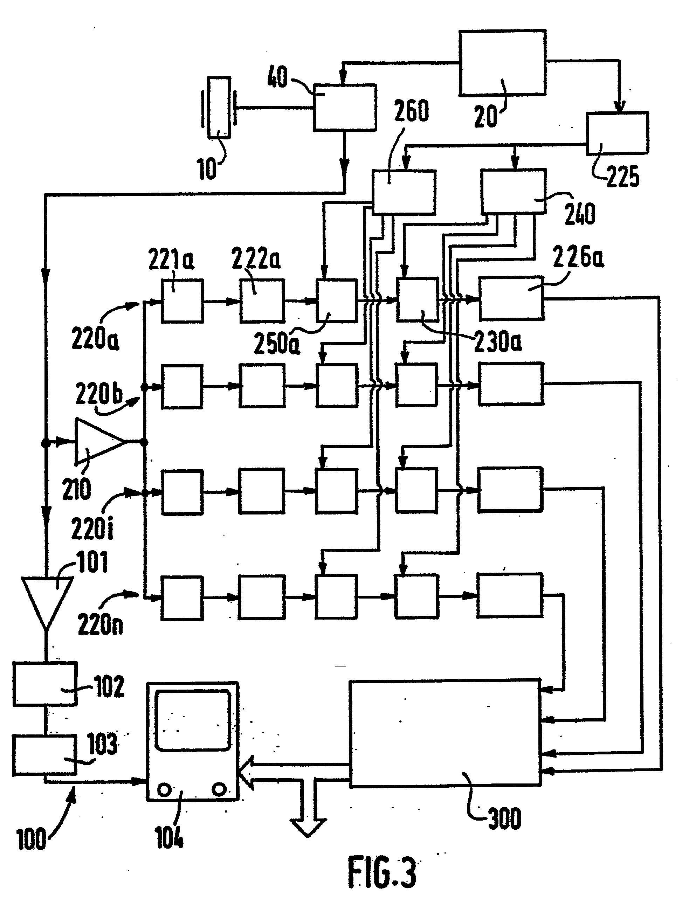

Par ailleurs, dans un deuxième mode de réalisation représenté sur la figure 3, l'appareil selon l'invention permet d'analyser un milieu dont l'atténuation est connue ou a pu être déterminée, sans référence à un fantôme de même atténuation que le milieu à explorer. Il faut alors insérer dans chaque voie, entre le détecteur d'enveloppe 222a à 222n et l'amplificateur logarithmique 226a à 226n, un circuit de multiplication 250a à 250n, suivi du circuit de division 230a à 230n. Le circuit de multiplication 250a à 250n reçoit sur une première entrée le signal de sortie du détecteur d'enveloppe correspondant et sur une deuxième entrée un signal de correction assurant la compensation de l'effet d'atténuation et délivré par une mémoire 260 commandée par le circuit d'horloge 225. Le circuit de division 230a à 230n reçoit sur sa première entrée le signal de sortie du circuit de multiplication correspondant et sur sa deuxième entrée un signal de correction assurant la compensation de l'effet de diffraction et délivré par la mémoire 240.

Comme précédemment, la mémoire 240 est soit une mémoire morte programmable, de type PROM par exemple, soit une mémoire à accès aléatoire. Elle est chargée de la façon suivante. On opère la sélection d'une tranche du milieu à examiner située à l'avant de ce milieu par rapport à l'appareil et à une distance Z sur l'axe principal de propagation, le milieu intermédiaire entre cette tranche et l'appareil étant à faible atténuation, de l'eau par exemple. A signal d'émission constant, on détermine dans cette position le spectre énergétique du signal échographique, puis on reprend cette détermination à la même distance Z mais pour d'autres positions obtenues par déplacements perpendiculaires à l'axe principal de propagation, afin d'obtenir un spectre énergétique moyen; on effectuera par exemple, comme précédemment, une moyenne de 100 spectres autour de la même position. On répète ensuite la même détermination de spectre énergétique moyen, à d'autres distances Z entre l'appareil et le milieu à examiner mais en considérant toujours dans ce milieu la même tranche grâce à l'action d'un circuit de sélection temporelle définissant une fenêtre de temps. On calcule alors, pour toutes ces positions successives le long de l'axe Z, les valeurs de correction de diffraction, les mesures effectuées ayant en effet éliminé toute influence de l'atténuation par le choix approprié du milieu intermédiaire, et ces valeurs sont introduites dans la mémoire 240.

**Revendications**

1. Procédé d'exploration de milieux par échographie ultrasonore comportant une émission répétée de signaux ultrasonores par au moins un transducteur ultrasonore et la réception des signaux échographiques ultrasonores correspondant aux obstacles rencontrés dans leur direction de propagation par les signaux émis, procédé dans lequel les signaux reçus sont aiguillés sur n voies parallèles correspondant à des bandes de fréquence sensiblement égales et jointives pour couvrir approximativement toutes les fréquences des signaux reçus, puis l'on détermine l'enveloppe des signaux dans chaque voie, caractérisé en ce qu'il est destiné à déterminer la dépendance en fréquence de la fonction de diffusion du milieu exploré $U(f) = af^b$, a et b étant des coefficients, et la fonction de diffusion étant liée au spectre de puissance $S_W(\tau, f)$ des échos reçus dans une fenêtre temporelle W à l'instant $\tau$ par la relation

$S_W(\tau, f) = |G(f)|^2 \cdot |U(f)|^2 \cdot D(\tau, f) \cdot e^{-2\alpha(f)c\tau}$ où $|G(f)|^2$ dépend du signal d'émission et du transducteur, $D(\tau, f)$ traduit l'effet de diffraction, et $\alpha(f)$ et c correspondent respectivement à l'atténuation et à la vitesse des signaux ultrasonores dans le milieu exploré, en ce que chacun de ces signaux-enveloppes, proportionnel au spectre de puissance du signal reçu dans la voie correspondante, est divisé par un signal de division proportionnel au spectre de puissance d'un fantôme de même atténuation ultrasonore que celle du milieu exploré, en ce qu'on détermine le logarithme du signal résultant de cette division, après quoi, à partir des signaux ainsi obtenus, on procède en sortie desdites voies a, b, ..., i, ..., n aux opérations suivantes:

(a) calcul du logarithme de la fréquence centrale $f_V$ de la bande passante associée à chaque voie, ou d'une autre fréquence représentative de cette bande passante;

(b) mémorisation et/ou représentation du logarithme du signal résultant de la division et représentant le rapport de la fonction de diffusion du milieu exploré et de celle du fantôme en fonction de ladite fréquence intervenant dans le calcul effectué en (a);

(c) calcul de la fonction de diffusion du milieu exploré à partir dudit rapport des fonctions de diffusion, la fonction de diffusion du fantôme étant connue, et en ce que le signal de division proportionnel au spectre de puissance du fantôme est obtenu après avoir réalisé les mesures suivantes: (a) opérer la sélection d'une tranche du fantôme située à l'avant de celui-ci par rapport à l'appareil et à une distance Z sur la direction de propagation, le fantôme étant appliqué contre le transducteur; (b) à signal d'émission constant, déterminer le spectre énergétique du signal échographique reçu, dans une première position et à la distance Z, puis à la même distance Z mais pour d'autres positions obtenues par déplacements perpendiculaires à la direction de propagation afin d'obtenir un spectre énergétique moyen; (c) répéter la même détermination de spectre énergétique moyen à d'autres distances Z entre l'appareil et le fantôme; (d) calculer pour toutes ces distances successives le long de l'axe Z les valeurs dudit signal de division.

2. Appareil d'exploration de milieux par échographie ultrasonore pour la mise en œuvre du procédé selon la revendication 1, comportant au moins un transducteur ultrasonore associé à un étage d'émission pour assurer une émission répétée de signaux ultrasonores et à un étage de réception pour assurer la réception des échos ultrasonores correspondant aux obstacles rencontrés dans leur direction de propagation par les signaux émis, ledit étage de réception comprenant au moins:

(A) un amplificateur (210) recevant le signal de sortie du transducteur;

(B) un ensemble de n voies (220a à 220n) en parallèle les unes sur les autres en sortie de l'amplificateur, comprenant elle-mêmes chacune successivement:

(1) un filtre passe-bande (221a à 221n), l'ensemble des n filtres ainsi prévus étant tel que leurs bandes passantes respectives sont sensiblement égales et jointives pour couvrir approximativement la bande passante du transducteur;

(2) un détecteur d'enveloppe (222a à 222n), identique dans chaque voie et comprenant un redresseur suivi d'un filtre passe-bas; caractérisé en ce que, pour déterminer la dépendance en fréquence de la fonction de diffusion du milieu exploré $U(f) = af^b$, a et b étant des coefficients, et la fonction de diffusion étant liée au spectre de puissance $S_W(\tau, f)$ des échos reçus dans une fenêtre temporelle W à l'instant $\tau$ par la relation $S_W(\tau, f) = |G(f)|^2 \cdot |U(f)|^2 \cdot D(\tau, f) \cdot e^{-2\alpha(f)c\tau}$ où $|G(f)|^2$ dépend du signal d'émission et du transducteur, $D(\tau, f)$ traduit l'effet de filtrage dû à la diffraction, et $\alpha(f)$ et c correspondent respectivement à l'atténuation et à la vitesse des signaux ultrasonores dans le milieu exploré, l'étage de réception comprend également, dans chaque voie, à la suite du détecteur d'enveloppe:

(3) un circuit de division (230a à 230n), qui reçoit sur une première entrée le signal de sortie du détecteur d'enveloppe correspondant et sur une deuxième entrée ledit signal de division délivré par une première mémoire commandée par un circuit d'horloge de l'étage d'émission;

(4) un amplificateur logarithmique (226a à 226n);

et en ce qu'en sortie des n voies, l'étage de réception comprend également un circuit de traitement arithmétique (300) agencé pour, à partir de leurs n signaux de sortie:

(a) calculer le logarithme de la fréquence centrale $f_V$ de la bande passante associée à chaque voie, ou d'une autre fréquence représentative de cette bande passante;

(b) mémoriser et/ou représenter le logarithme du signal résultant de la division et représentant le rapport de la fonction de diffusion du milieu exploré et de celle du fantôme en fonction de ladite fréquence intervenant dans le calcul effectué en (a);
(c) calculer la fonction de diffusion du milieu exploré.

**Claims**

1. A method of investigating media by ultrasonic echography, involving a repeated transmission of ultrasonic signals by at least one ultrasonic transducer and the reception of the ultrasonic echo signals which correspond to the obstacles encountered by the transmitted signals in their propagation direction, in which method the signals received are routed via n parallel channels which correspond to frequency bands which are substantially equal and consecutive so as to cover approximately all frequencies of the signals received, the envelope of the signals in each channel being subsequently determined, characterized in that it is intended to determine the frequency-dependency of the scatter function of the medium investigated, $U(f) = af^b$, where a and b are coefficients, the scatter function being linked to the power spectrum $S_W(\tau, f)$ of the echoes received in a time slot W at the instant $\tau$ by the relation $S_W(\tau, f) = |G(f)|^2 \cdot |(U(f)|^2 \cdot D(\tau, f) \cdot e^{-2\alpha(f)c\tau}$ where $|G(f)|^2$ depends on the transmitted signal and on the transducer, $D(\tau, f)$ represents the diffraction effect, and $\alpha(f)$ and c correspond to the attenuation and the speed, respectively, of the ultrasonic signals in the medium investigated, in that each of these envelope signals, being proportional to the power spectrum of the signal received in the corresponding channel, is divided by a dividing signal which is porportional to the power spectrum of a phantom having the same ultrasonic attenuation as the medium investigated, in that the logarithm of the signal resulting from said division is determined, after which the following operations are performed on the output of said channels a, b, ..., i, ..., n on the basis of the signals thus obtained:
(a) calculation of the logarithm of the central frequency of the passband associated with each channel, or of another frequency representative of said passband;
(b) storage and/or representation of the logarithm of the signal resulting from the division and representation of the ratio of the scatter function of the medium investigated and that of the phantom as a function of said frequency involved in the calculation performed sub (a);
(c) calculation of the scatter function of the medium investigated on the basis of said ratio of the scatter functions, the scatter function of the phantom being known, and in that the dividing signal which is proportional to the power spectrum of the phantom is obtained after the following steps have been taken: (a) selection of a slice of the phantom which is situated at the front thereof with respect to the device and at a distance Z in the propagation direction, the phantom being arranged against the transducer; (b) determination, for a constant transmitted signal, of the energy spectrum of the echographic signal received in a first position and at the distance Z, subsequently at the same distance Z but for other positions, realized by displacements perpendicularly to the propagation direction, in order to obtain a mean energy spectrum; (c) repeating the same determination of the mean energy spectrum for other distances Z between the device and the phantom; (d) calculating the values of said dividing signal for all said successive distances along the axis Z.

2. A device for investigating media by ultrasonic echography by carrying out the method claimed in Claim 1, comprising at least one ultrasonic transducer which is connected to a transmitter stage for a repeated transmission of ultrasonic signals and to a receiver stage for receiving the ultrasonic echoes which correspond to the obstacles encountered by the transmitted signals in their propagation direction, said receiver stage comprising at least:
(A) an amplifier (210) which receives the output signal of the transducer;
(B) an assembly of n channels (220a to 220n) which are connected in parallel to the output of the amplifier and each of which successively comprises:
(1) a bandpass filter (221a to 221n), the assembly of n filters thus formed being such that their respective passbands are substantially equal and consecutive so that they cover approximately the passband of the transducer;
(2) an envelope detector (222a to 222n) which is identical in each channel and which comprises a rectifier followed by a lowpass filter; characterized in that for the determination of the frequency-dependency of the scatter function of the medium investigated, $U(f) = af^b$, where a and b are coefficients, the scatter function being linked to the power spectrum $S_W(\tau, f)$ of the echoes received in a time slot W at the instant by the relation $S_W(\tau, f) = |G(f)|^2 \cdot |(U(f)|^2 \cdot D(\tau, f) \cdot e^{-2\alpha(f)c\tau}$ where $|G(f)|^2$ depends on the transmitted signal and on the transducer, $D(\tau, f)$ represents the filtering effect due to the diffraction, and $\alpha(f)$ and c correspond to the attenuation and the speed, respectively, of the ultrasonic signals in the medium investigated, the receiver stage also comprises, connected subsequent to the envelope detector in each channel:
(3) a divider circuit (230a to 230n), a first input of which receives the output signal of the corresponding envelope detector and a second input of which receives said dividing signal supplied by a first memory which is controlled by a clock circuit of the transmitter stage;
(4) a logarithmic amplifier (226a to 226n);

and in that, at the output of the n channels, the receiver stage also comprises an arithmetic circuit (300) for performing, on the basis of their n output signals:

(a) calculating the logarithm of the central frequency fv of the passband associated with each channel, or of another frequency representative of said passband;

(b) storing and/or representing the logarithm of the signal resulting from the division and representing the ratio of the scatter function of the medium investigated and that of the phantom as a function of said frequency involved in the calculation performed sub (a);

(c) calculating the scatter function of the medium investigated.

**Patentansprüche**

1. Verfahren zum Untersuchen von Medien durch Ultraschall-Echographie mit einer wiederholten Emission von Ultraschallsignalen durch einen Ultraschallwandler und mit dem Empfang der echographischen Ultraschallsignale entsprechend den in der Ausbreitungsrichtung der ausgesandten Signale begegneten Hindernissen, bei welchem Verfahren die empfangenen Signale auf n parallele Wege entsprechend den im wesentlichen gleichen und zum Umfassen etwa aller Frequenzen der empfangenen Signale anschließenden Frequenzbändern geleitet werden, wonach die Umhüllende der Signale in jedem Weg bestimmt wird, dadurch gekennzeichnet, daß das Verfahren zum Bestimmen der Frequenzabhängigkeit der Streuungsfunktion des untersuchten Mediums $U(f) = af^b$, dient, worin a und b Koeffizienten sind, und die Streuungsfunktion mit dem Leistungsspektrum $S_W(\tau, f)$ der in einem Zeitfenster W zum Zeitpunkt $\tau$ empfangenen Echos durch die Beziehung $S_W(\tau, f) = | G(f) |^2 . | (U(f) |^2 . D(\tau, f) . e^{-2\alpha(f)c\tau}$ verknüpft ist, worin $| G(f) |^2$ vom Emissionssignal und vom Meßwandler abhängig ist, $D(\tau, f)$ den Streuungseffekt wiedergibt, und $\alpha(f)$ sowie c der Abschwächung bzw. der Geschwindigkeit der Ultraschallsignale im untersuchten Medium entsprechen, daß jede dieser Signalumhüllenden proportional dem Leistungsspektrum des im entsprechenden Weg empfangenen Signals durch ein Teilungssignal geteilt wird, das proportional dem Leistungsspektrum eines Phantoms mit derselben Ultraschallabschwächung als die des untersuchten Mediums ist, daß der Logarithmus des aus dieser Teilung entstandenen Signals bestimmt wird, wonach ausgehend von den auf diese Weise erhaltenen Signalen am Ausgang der Wege a, b, ..., i, ..., n folgende Operationen durchgeführt werden:

(a) Logarithmusberechnung für jede Mittenfrequenz fv des jedem Weg zugeordneten Durchlaßbandes oder für eine andere, dieses Durchlaßband darstellende Frequenz;

(b) Speicherung und/oder Darstellung des Logarithmus des aus der Teilung entstandenen Signals, das das Verhältnis der Streuungsfunktion des untersuchten Mediums und das des Phantoms abhängig von der bei der unter (a) durchgeführten Berechnung bestimmenden Frequenz darstellt;

(c) Berechnung der Streuungsfunktion des untersuchten Mediums ausgehend vom Verhältnis der Streuungsfunktionen, wobei die Streuungsfunktion des Phantoms bekannt ist, und daß das dem Leistungsspektrum des Phantoms proportionale Teilungssignal nach der Durchführung nachstehender Messungen erhalten wird: (a) Wählen einer Scheibe des Phantoms, die in bezug auf das Gerät an der Vorderseite des Phantoms und im Abstand Z in der Ausbreitungsrichtung liegt, wobei das Phantom an den Meßwandler gelegt wird; (b) Bestimmen des Energiespektrums des empfangenen echographischen Signals in einer ersten Position und im Abstand Z bei konstantem Emissionssignal, und danach im gleichen Abstand Z, aber in anderen Positionen, die durch senkrecht zur Ausbreitungsrichtung verlaufenden Verschiebungen zum Erhalten eines mittleren Energiespektrums erhalten werden; (c) Wiederholen derselben Bestimmung des mittleren Energiespektrums in anderen Abständen Z zwischen dem Gerät und dem Phantom; (d) Berechnen der Werte des genannten Teilungssignals für alle diese aufeinanderfolgenden Abstände entlang der Achse Z.

2. Vorrichtung zum Untersuchen von Medien durch Ultraschallechographie zum Durchführen des Verfahrens nach Anspruch 1, mit wenigstens einem Ultraschall-Meßwandler, dem eine Emissionsstufe zur Gewährleistung einer wiederholten Emission von Ultraschallsignalen sowie eine Empfangsstufe zur Gewährleistung des Empfangs der Ultraschallechos entsprechend den in der Ausbreitungsrichtung der ausgesandten Signale begegneten Hindernissen zugeordnet sind, wobei die Empfangsstufe wenigstens folgende Elemente enthält:

(A) einen Verstärker (210), der das Ausgangssignal des Meßwandlers empfängt;

(B) eine Gruppe von n Wegen (220a bis 220n), die parallel zueinander am Verstärkerausgang liegen und aufeinanderfolgend je folgende Elemente besitzen:

(1) ein Bandpaßfilter (221a bis 221n), wobei die Gesamtheit der auf diese Weise angeordneten n Filter sich derart verhält, daß ihre betreffenden Durchlaßbänder im wesentlichen gleich sind, nebeneinander liegen, und in etwa das Durchlaßband des Meßwandlers umfassen;

(2) einen Umhüllendendetektor (222a bis 222n), die in jedem Weg gleich ist und einen von einem Tiefpaßfilter gefolgten Gleichrichter enthält; dadurch gekennzeichnet, daß zum Bestimmen der Frequenzabhängigkeit der Streuungsfunktion des untersuchten Mediums $U(f) = af^b$, worin a und b Koeffizienten sind, und die Streuungsfunktion mit dem Leistungsspektrum $S_W(\tau, f)$ der in einem Zeitfenster W zum Zeitpunkt $\tau$ empfangenen Echos durch die Beziehung $S_W(\tau, f) = | G(f) |^2 .$

$| U(f) |^2 \cdot D(\tau, f) \cdot e^{-2\alpha(f)c\tau}$ verknüpft ist, worin $| G(f) |^2$ vom Emissionssignal und vom Meßwandler abhängig ist, $D(\tau, f)$ den Streuungseffekt wiedergibt, und $\alpha(f)$ sowie c der Abschwächung bzw. der Geschwindigkeit der Ultraschallsignale im untersuchten Medium entsprechen, die Empfangsstufe ebenfalls in jedem Weg in Nachschaltung des Umhüllendendetektors folgende Elemente enthält:

(3) eine Teilerschaltung (230a bis 230n), die das Ausgangssignal des betreffenden Umhüllendendetektors an einem ersten Eingang und das Teilungssignal an einem zweiten Eingang empfängt, wobei dieses Teilungssignal von einem ersten Speicher ausgegeben wird, der durch eine Taktschaltung der Emissionsstufe gesteuert wird;

(4) einen logarithmischen Verstärker (226a bis 226n);

und daß am Ausgang der n Wege die Empfangsstufe außerdem eine arithmetische Bearbeitungsschaltung (300), die ausgehend von den n Ausgangssignalen der Wege dient zum

(a) Berechnen des Logarithmus der Mittenfrequenz fv des jedem Weg zugeordneten Durchlaßbandes oder einer anderen, dieses Durchlaßband darstellenden Frequenz;

(b) Speichern oder Darstellen des Logarithmus des aus der Teilung entstandenen Signals, das das Verhältnis der Streuungsfunktion des untersuchten Mediums und der des Phantoms abhängig von der bei der unter (a) durchgeführten Berechnung bestimmenden Frequenz darstellt;

(c) Berechnen der Streuungsfunktion des untersuchten Mediums.

FIG.1

FIG.2

FIG.3